# EUROPEAN PATENT SPECIFICATION

(11) **EP 0 549 919 B1**
(45) Date of publication and mention of the grant of the patent: **27.04.1994**
(21) Application number: 92120796.5
(22) Date of filing: 05.12.1992
(51) Int. Cl.: B60M 1/30, H01B 17/18

(54) **Electrical insulator for supporting a conductor rail**
Elektrischer Isolator zur Unterstützung einer Stromschiene
Isolateur électrique pour le support d'un rail conducteur

(30) Priority: 02.01.1992 GB 9200024
(43) Date of publication of application: 07.07.1993
(73) Proprietor: REHAU AG + Co, 95111 Rehau (DE)
(72) Inventor: Strickstrock, Theo, W-8673 Rehau (DE)

(56) References cited:
- DE-U- 9 112 844
- GB-A- 1 284 173

## Description

This invention relates to an electrical insulator and in particular to an insulator for supporting and insulating an electrical power conductor rail in electric railway traction systems. Such rails are often referred to as the third rail.

The third rail does not bear the weight of the train but spring-loaded current collection shoes, mounted on the train, contact against the rail in order to pick up current for application to the train drive motors. The third rail may be positioned either between or on either side of the running rails depending upon requirements and/or insulation circumstances.

In the majority of installations the current is supplied via the third (conductor) rail and returns via the running rails. In certain circumstances the power returns via a second conductor rail, the installation of which is similar to that of the "third" rail. In these cases the function and installation of the adjustable insulator described herein is identical.

Generally speaking the third rail is supported at spaced intervals on insulators which not only mechanically support the rail, but also provide electrical insulation from earth.

Insulators are mounted either directly onto the rail support sleepers or onto support pillars/plinths.

Spacing of insulators may be as frequent as every sleeper although this will only be occasionally necessary and will be dictated by the installation site.

Existing insulators are made of porcelain and are subject to breakage both in service and before fitting due to their fragile nature. In addition, as the running rails wear during use, the relationship between the conductor rail and running rail's height changes, the height of the insulator above the base has to be lowered to compensate for the increase in relative height between the top surfaces of the rails. This is currently achieved by inserting shims under the insulator to raise it off the base by an appropriate amount. These shims are subsequently removed during the life of the rails. Different thicknesses of shim are used for the purpose, and any one insulator may have to be re-shimmed in this way several times during its working life in order to cater for rail wear.

From GB-A- 1284 173, it is known to build insulators of adjustable height , which make it possible to compensate for the wear of the running rail without use of shims, thereby simplifying the height adjustment operation of the insulator.

The present invention provides an insulator of the above mentioned type whereby the height adjustment operation is simplified. This end is achieved by the features of the characterising part of the independent claim 1.

There are various ways of providing the adjustable fitting between the two components. In this connection, it must be borne in mind that the forces applied through from the top to the bottom surface may be quite considerable and any adjustable joint has to be sufficiently strong to take such forces. There is the static weight of the conductor rail itself, which can be quite considerable, and then there are extra forces involved as a train passes over, and also due to thermal expansion and contraction of the rail. The bearing surfaces between the two components should be sufficient to withstand these forces, whilst at the same time being adjustable.

A further factor which has to be taken into account is movement of the rail in use due, for example, to thermal size changes but in particular the vibration as trains pass over, which can cause quite considerable transitory movements which must be allowed for without destroying the adjustment of the insulator.

We have devised a system based on a multi-start spiral track which is provided on at least one of the components and up or down which the other component may ride in order to adjust the distance between the top and bottom surfaces. This track may be in the form of a continuous slope, thus giving an infinitely variable adjustment. Preferably, however, the track is stepped to provide a stepped adjustment between the two components. This has the advantage of giving more easily defined changes in height and in addition more readily enables a stable structure to be achieved. Preferably the steps themselves are shaped in such a way as to discourage dislodgement from a particular adjusted position (for example due to vibration when a train passes over). This may be achieved in various ways, for example by shaping the steps, or providing the steps with a reverse slope or similar.

It will be seen that, in order to provide for adjustment up and down the multi-start track, the two components have to be rotated with respect to one another. Since the bottom component will, in practice, be affixed to a sleeper or other support device, and the top component supports the conductor rail, such relative movement is obviously undesirable when the insulator is in service. To cater for this problem, the preferred embodiment of the invention provides a third component, also preferably made of insulating material, which third component is fitted intermediate the aforesaid first and second components, and enables the height adjustment between the top and bottom surfaces to be achieved without having to rotate the first and second components relative to one another. To this end, the multi-start spiral track adjustment is provided between either the first and third components, or between the second and third components, with the remaining first or second component being rotatably mounted with respect to the third component. For example, a multi-start spiral track may be provided on the first (lower) component, and means are provided on the third (intermediate) component for allowing the third component to ride up and down this track to adjust the spacing between the first and third components. The second (top) component is rotatably mounted on the third component. Thus, in this arrangement, height adjustment can be achieved by rotating the third component relative to both the first and second components. During height adjustment, the first and second components do not need to rotate relative to one another although they do, of course, move towards and away from one another as the height is adjusted down and up. In practice, it is a wise precaution to provide means for locating the second and third components together so that, in normal service, they lock together, but can be released for relative rotation during height adjustment. A simple array of interengaging castellations on facing surfaces of both components will achieve this object.

In order that the invention may be better understood, an embodiment thereof will now be described by way of example only and with reference to the accompanying drawings in which:-
Figures 1 and 2 are plan and part sectional side views respectively of the lower component forming part of the third rail insulator of the invention;
Figures 3 and 4 are views similar to Figures 1 and 2 respectively, showing the intermediate component;
Figure 5 is a view similar to Figure 2, showing the top component;
Figure 6 is a view similar to Figure 5, but taken in a direction at right angles to that of Figure 5;
Figure 7 is a plan view of the top component, shown partly in section on the lines VII-VII of Figure 5;
Figure 8 is a diagrammatic side view of one of the two inserts on which the third rail sits; and
Figure 9 is a side sectional view of the assembled insulator.

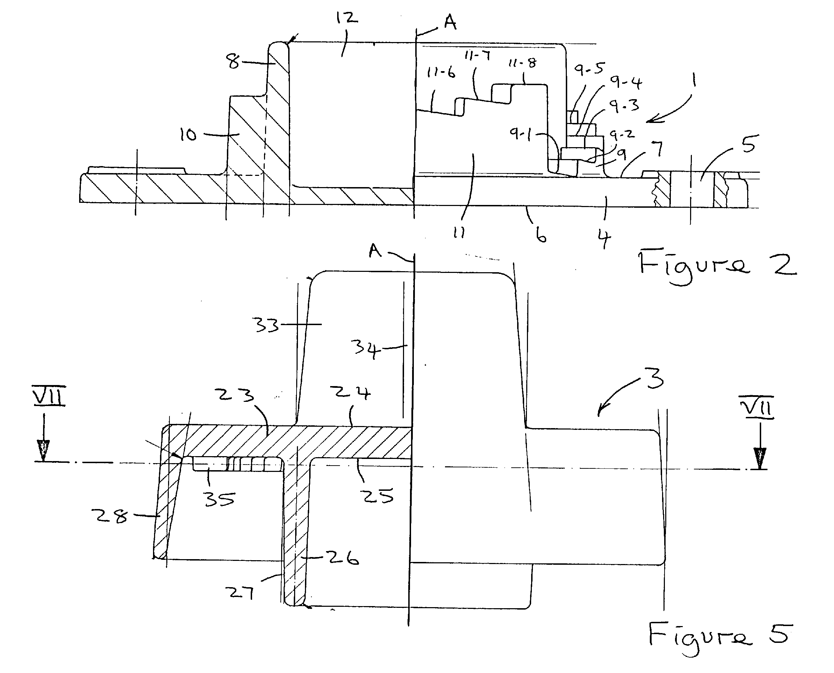

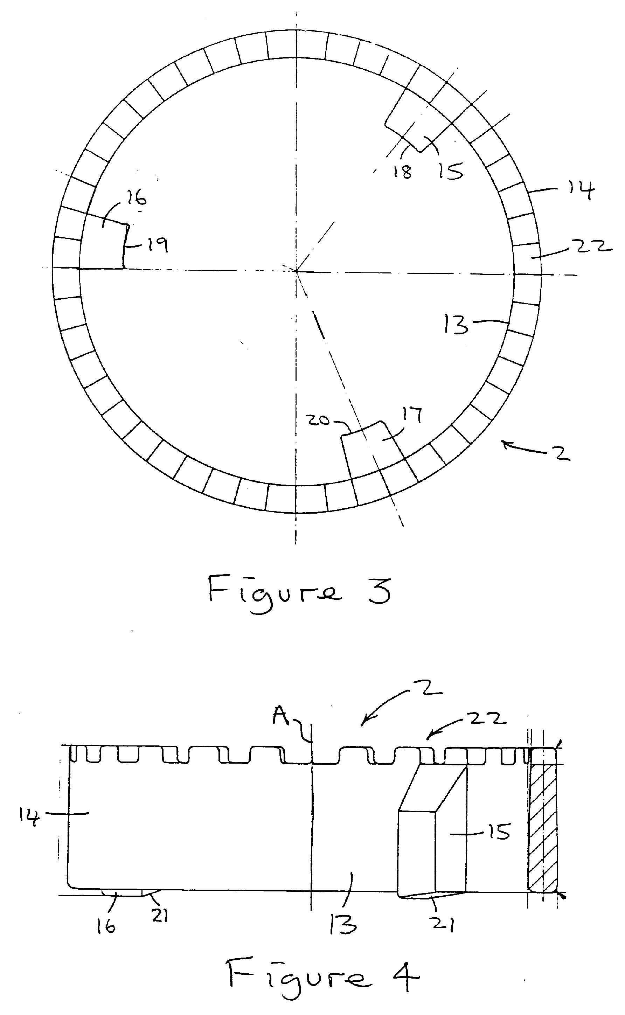

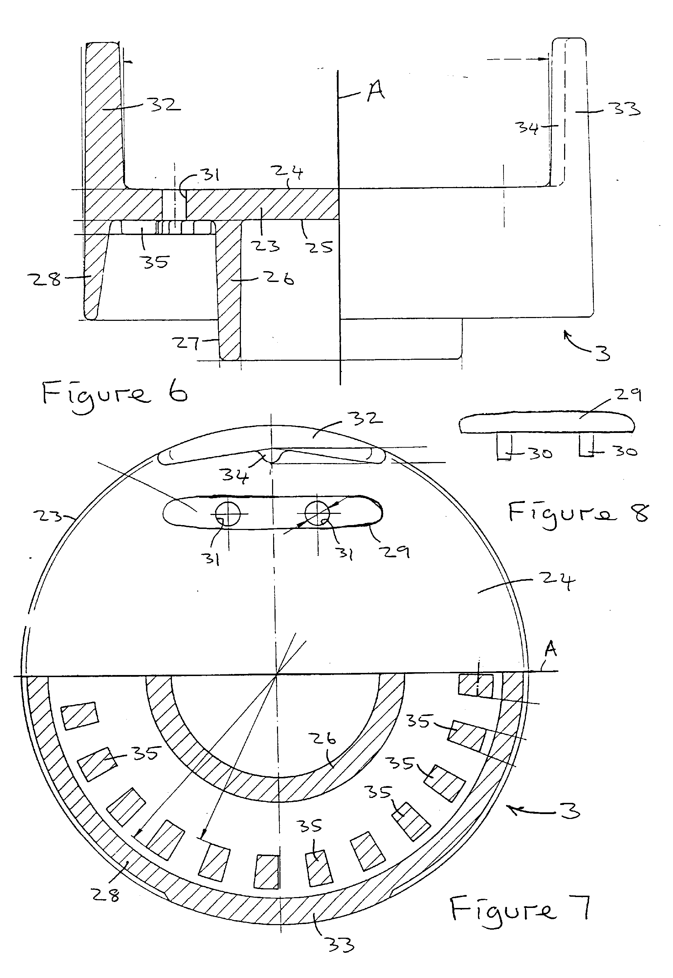

Reference is made herein to all of the drawings, but it should be noted that the Figure 9 view shows a number of minor modifications which will be discussed later. In interpreting the drawings, it should be noted that the parts to the left of line A in each of Figures 2, 5 and 6, and to the right of line A in Figure 4, are in section. Likewise that part below line A in Figure 7 is drawn in section on the lines VII-VII of Figure 5.

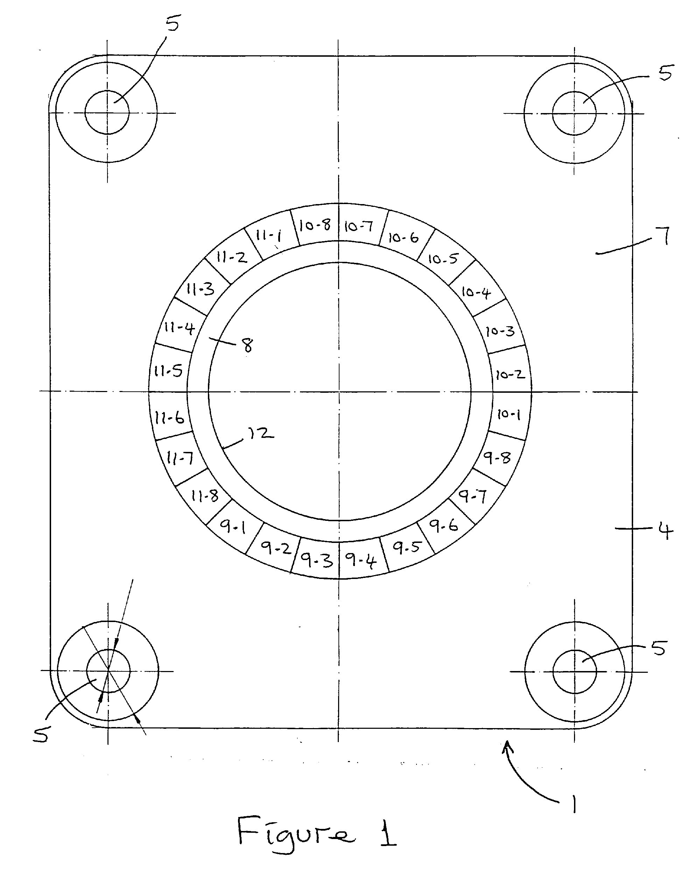

The insulator comprises three main components: a bottom component 1, shown in Figures 1 and 2, an intermediate component 2, shown in Figures 3 and 4, and a top component 3, shown in Figures 5, 6 and 7. All three components are preferably made of insulating material, although it is possible that one or more of the components may be made wholly or partly of a non-insulating material, for example metal. However, in the preferred form all three components are wholly made from strong plastics material, an example being glass reinforced thermosetting plastics material. Each component is made by compression moulding.

The bottom component 1 comprises a substantially flat base 4 having an undersurface 6 which, in use, is placed on the ground, or preferably on a prepared platform, conveniently a sleeper (not shown). The version illustrated is for wooden sleepers, and comprises four holes 5 for bolts or similar fastening devices whereby the base may be attached to the sleeper. In an alternative version (not shown)for concrete sleepers, a spigot, moulded integrally with the remainder of the base 4 extends centrally downwardly from the undersurface 6 to locate in a prepared hole in the sleeper. Generally, this spigot will be of non-uniform cross section - for example, oval - to prevent rotation.

Upstanding from the top surface 7 of base 4 is a generally cylindrical spigot 8. The spigot 8 is hollow and has a smooth interior wall surface 12. Positioned on the exterior of spigot 8 is a multi-start spiral staircase with, in the example shown, three separate spiral staircases 9, 10 and 11. Each staircase comprises eight steps 9.1 → 9.8, 10.1 → 10.8 and 11.1 → 11.8, and the top surface of each step, except the top, is given a reverse slope (i.e. in the reverse direction to the slope of the staircase) for reasons which will become apparent later. The top steps 9.8, 10.8 and 11.8 do not act as steps as such. Each of the steps is of equal angular extent, which in the example given is 15°.

The intermediate component 2 is of generally cylindrical shape and has generally smooth interior and exterior surfaces 13 and 14. The interior surface 13, however, is formed with three protruding buttresses 15, 16 and 17, one for each staircase 9, 10 and 11. The buttresses are equally spaced 120° apart. The outermost surfaces 18, 19 and 20 of the buttresses lie on a common circle which is of a diameter such that the intermediate section is a sliding fit over the spigot 8 of the bottom section 1. The undersurfaces 21 of each of the buttresses are sloped to correspond with the reverse slope given to each of the steps 9.1 .... etc. The relative sizes are such that, when intermediate section 2 is fitted over bottom section 1, the undersurface 21 of each of the buttresses 15, 16 and 17 come to rest on a corresponding step, for example 9.2, 10.2 and 11.2, of the staircases 9, 10 and 11.

It will be seen that, as the intermediate component 2 is rotated relative to the bottom component 1, the buttresses 15, 16 and 17 will ride up or down the steps of their respective spiral staircases 9, 10 or 11 and will thus effect a height adjustment as between the bottom component 1 and the intermediate component 2. Figure 9 shows the intermediate component in the lowermost position, with the undersurfaces 21 of buttresses 15, 16 and 17 resting on steps 9.1, 10.1 and 11.1 respectively.

The upper edge 22 of the intermediate component 2 is castellated in order to enable engagement of the intermediate component 2 with the top component 3. This will be explained in more detail later.

The top component 3 comprises a generally circular platform 23 having a top surface 24 and an undersurface 25. Extending centrally from undersurface 25 is a hollow cylindrical spigot 26 whose outer surface 27 has a diameter such that the spigot 26 is a slidable fit within the spigot 8 of bottom component 1. The undersurface 25 is further formed, about a circle slightly exterior of spigot 26, with a series of projections 35 which are such as to engage with the castellated top edge 22 of intermediate component 2. Outboard of the circle of projections 35, and at the circumferential edge of platform 23, the undersurface 25 is formed with a peripheral downwardly extending skirt 28. This skirt is intended to create a surface of a specified minimum length between the upper component 3, and the lower component 1 (Figure 9), which is protected from rain and the settling of moisture. This surface is commonly referred to as the dry path. This dry path serves to define an electrical tracking length sufficient to meet whatever regulations and/or requirements that are in force.

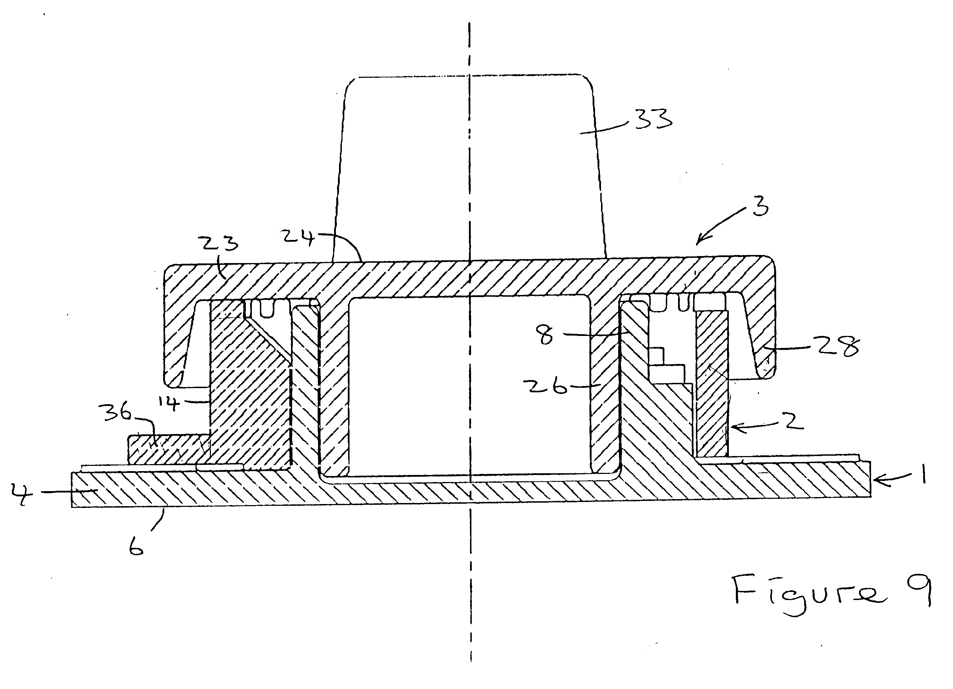

The top surface 24 of platform 23 supports the conductor rail (not shown). However, the rail will not in practice be directly supported on the surface 24, but will sit on a pair of support elements 29 (Figure 8) which have legs 30 by which they are fitted in apertures 31 in the platform 23. The position of one of the elements 29 is illustrated in Figure 7; the other element is not visible, but occupies the corresponding position on the other side of the platform. The elements are made from low friction material, such as acetal, and enable the rail/insulator assembly to take up movement due to a variety of causes, principally thermal expansion. The elements also define an air space underneath the rail, thus preventing the build up of moisture; the top surface 24 of the platform may be sloped away from a central ridge by a small amount, say 1°, in order to discourage puddling of water on the top surface.

The rail is positioned between guide cheeks 32,33 which extend upwards from the top surface 24. The shape of these guide cheeks generally follows the circular contour of the platform 23, but a central vertical ridge 34 is formed centrally of the inwards-facing surfaces in order to give central support between rail and cheek, and also to strengthen the cheek at this point.

In a modified form of the invention shown in Figure 9, the intermediate component 2 is provided with three protrusions 36 extending outwardly from the outer surface 14 and at equally spaced intervals - 120° apart - around the circumference. These protrusions are provided in order to assist in the operation of hand turning the intermediate component 2 during adjustment of the insulator when in service. The presence of these protrusions means that the skirt 28 has to be shortened to maintain a sufficient clearance below the bottom edge of the skirt 28 to prevent current leakage in adverse weather conditions.

As already mentioned, Figure 9 shows the components in the lowermost position - i.e. with the shortest distance between the undersurface 6 of bottom component 1 and the top surface 24 of top component 3. When fitted, the conductor rail will extend from left to right in Figure 9, and be supported on the top surface 24 of the insulator via the low-friction elements 30, and guided between the cheeks 32,33 to prevent lateral movement.

Generally speaking, when installing a new rail, the insulator will be installed in its uppermost position, and as the running rail wears during service, the insulator, in common with the others supporting the conductor rail, will be adjusted downwards to maintain the height relationship between the uppermost surfaces of the running and conductor rails, to compensate for this wear. This adjustment takes place in discrete steps, six separate adjustments (after the uppermost position) being provided for in the particular embodiment illustrated. The size of each step in the example described is approximately 4 mm, giving a total adjustment of 24 mm.

The height of the insulator is adjusted, while in service, by jacking up the rail either side of the insulator to raise it by the required height increase, plus an amount at least sufficient for the projections 35 to clear the castellated top edge 22 of the intermediate component. The top component which, because of cheeks 32,33 cannot be rotated, is then raised to clear the intermediate component so that the intermediate component can be rotated in order to cause the buttresses 15, 16 and 17 to ride up the steps and thereby lower the intermediate component relative to the bottom component. When the required height is reached, the top component is dropped back onto the intermediate component so that the castellations interengage, and the rail is lowered back onto the top component at the new height. No tools are needed, other than to jack up the rail, and no shims or other loose components are needed.

The lower surfaces 21 of the buttresses 15, 16 and 17 together transmit the total weight and other forces from the top component through to the bottom component. The existence of the reverse slope on the steps discourages these buttresses from becoming dislodged from their respective steps due, for example, to vibration forces as trains pass over. However, more complex interengaging shapes could be employed for the surfaces 21 and the steps if vibration is felt to be a particular problem. Clearly, if it is made necessary for the intermediate component to rise up in order to lose its adjustment then the changes of loss of adjustment are reduced. It is also possible that the components may be locked together once the required adjustment has been achieved.

## Claims

1. An electrical insulator for supporting and insulating an electrical power conductor rail in an electric railway traction system, said insulator having three separate components, a first (1) of said components having an under surface (6) on which the insulator rests in use, the second (3) of said components having a top surface (24) for supporting the conductor rail, the third (2) component fitted intermediate said first (1) and second (3) components and rotable with respect to both said first and second components and wherein the first component having a multi-start spirale track (9,10,11) to ride the third component (2) up and down said track in order to adjust the distance between the first and the second component, characterized in that the multi-start spirale track (9,10,11) is situated on the outer perimeter of the first component (1) starting from the top surface of its base surrounding its cylindrical spigot (8), and that said third component (2) is lodged surrounding the outer perimeter of the first component (1) having at least three buttresses (15,16,17) corresponding with the reverse slope of the spirale track of said first component.

2. An insulator as claimed in claim 1, characterised in that said third component is provided with a plurality of abutment surfaces equal in number of stepped spirale slopes making up the multi-start track.

3. An insulator as claimed in claim 1, characterised in that said abutment surfaces are angled to match the reverse slope of the steps making up the stepped spirale slope.

## Patentansprüche

1. Ein elektrischer Isolator für die Aufnahme und Isolierung einer elektrischen Stromschiene in einem elektrischen Bahnsystem, wobei der genannte Isolator drei separate Teile aufweist: der erste Teil (1) hat eine untere Fläche (6), auf welcher der Isolator im Betrieb aufliegt; der zweite Teil (3) hat eine obere Fläche (26) zur Aufnahme der Stromschiene; der dritte Teil (2) ist zwischen den genannten ersten und zweiten Teilen (1,3) befestigt und im Hinblick auf die beiden genannten ersten und zweiten Teile (1,3) drehbar, wobei das erste Teil (1) eine mehrgängige Spiralführungstreppe (9,10,11) aufweist, um den dritten Teil (2) nach oben und unten zu verschieben, um den Abstand zwischen dem ersten und zweiten Teil (1,3) auszugleichen, dadurch gekennzeichnet, daß die mehrgängige Spiralführungstreppe (9,10,11) sich am Außenumfang des ersten Teils (1) befindet, beginnend von der oberen Fläche ihrer Basis, die ihren zylindrischen Zapfen (8) umgibt und dadurch, daß der genannte dritte Teil (2) so angebracht ist, daß es den Außenumfang des ersten Teils (1) umgibt und mit mindestens drei Widerlagern (15,16,17) versehen ist, die dem umgekehrten Gefälle der Spiralführungstreppe (9,10,11) des genannten ersten Teils (1) entsprechend.

2. Ein Isolator gemäß Anspruch 1, dadurch gekennzeichnet, daß der genannte dritte Teil (2) mit einer Vielzahl von Anliegeflächen (22) versehen ist, deren Anzahl den abgestuften Spiralneigungen entspricht, aus denen die mehrgängige Spiralführungstreppe (9,10,11) besteht.

3. Ein Isolator gemäß Anspruch 1, dadurch gekennzeichnet, daß die genannten Anliegeflächen (22) abgewinkelt sind, damit sie mit der umgekehrten Neigung der Stufen übereinstimmen, aus denen die abgestufte Spiralführungstreppe (9,10,11) besteht.

## Revendications

1. Un isolateur electirique destiné à recevoir et à isoler un rail de contact électrique dans un système de ligne électrique présente trois parties distinctes : la première partie (1) a une surface inférieure (6) sur laquelle repose l'isolateur en service; la deuxième partie (3) a une surface supérieure (26) supportant le rail de contact; la troisième partie (2) est fixée entre la première et la deuxième partie (1, 3) et peut tourner par rapport à la première et à la deuxième partie (1, 3), la première partie (1) présentant un escalier de guidage en spirale (9, 10, 11) à plusieurs pas permettant de glisser la troisième partie (2) vers le haut et le bas afin de compenser la distance entre la première et la deuxième partie (1, 3), caractérisé par le fait que l'escalier de guidage en spirale à plusieurs pas (9, 10, 11) est disposé à la périphérie de la première partie (1), en débutant à la surface supérieure de sa base, qui entoure sa tige cylindrique (8) et par le fait que la troisième partie (2) est fixée de telle manière qu'elle entoure la périphérie de la première partie (1) et qu'elle est munie d'au moins trois butées (15, 16, 17) correspondant à la pente inverse de l'escalier de guidage en spirale (9, 10, 11) de la première partie (1).

2. Un isolateur selon la revendication 1, caractérisé par le fait que la troisième partie (2) est munie de nombreuses surfaces d'appui (22) dont le nombre correspond aux inclinaisons en spirales étagées dont est constitué l'escalier de guidage en spirale à plusieurs pas (9, 10, 11).

3. Un isolateur selon la revendication 1, caractérisé par le fait que les surfaces d'appui (22) sont chanfreinées pour qu'elles coïncident avec la pente inverse des échelons dont est constitué l'escalier de guidage en spirale étagé (9, 10, 11).
